Europäisches Patentamt

European Patent Office

Office européen des brevets

(19)

(11) Publication number: **0 131 986**
**B1**

# EUROPEAN PATENT SPECIFICATION

(45) Date of publication of patent specification: **16.12.87**

(51) Int. Cl.⁴: **B 01 J 29/06, C 10 G 11/05**

(21) Application number: **84200903.7**

(22) Date of filing: **21.06.84**

(54) **Catalyst compositions.**

(30) Priority: **01.07.83 NL 8302343**

(43) Date of publication of application:
**23.01.85 Bulletin 85/04**

(45) Publication of the grant of the patent:
**16.12.87 Bulletin 87/51**

(84) Designated Contracting States:
**BE DE FR GB IT SE**

(56) References cited:
**EP-A-0 066 903**
**DE-A-2 149 218**
**FR-A-2 207 178**
**US-A-3 544 650**
**US-A-3 748 251**
**US-A-3 843 740**
**US-A-3 925 195**

(73) Proprietor: **SHELL INTERNATIONALE
RESEARCH MAATSCHAPPIJ B.V.
Carel van Bylandtlaan 30
NL-2596 HR Den Haag (NL)**

(72) Inventor: **Heinerman, Jacobus Johannes
Leonardus
Badhuisweg 3
NL-1031 CM Amsterdam (NL)**

(74) Representative: **Aalbers, Onno et al
P.O. Box 302
NL-2501 CH The Hague (NL)**

Courier Press, Leamington Spa, England.

**Description**

The invention relates to catalyst compositions suitable for producing gasoline from a hydrocarbon mixture boiling above the gasoline range.

For the production of gasoline from hydrocarbon mixtures boiling above the gasoline range ample use is made of catalytic cracking. Said gasoline production by catalytic cracking is carried out by contacting the hydrocarbon mixture to be cracked at an elevated temperature with a cracking catalyst.

Generally, catalytic cracking on a commercial scale is conducted in a continuous process by using an arranged apparatus of a vertically disposed cracking reactor and a catalyst regenerator. Hot regenerated catalyst coming from the regenerator is suspended in the oil to be cracked and the mixture is passed through the cracking reactor in an upward direction. The catalyst deactivated by the deposition of coke is separated from the cracked product and stripped, after which it is transferred to the regenerator, where the coke deposit on the catalyst is burnt off. The cracked product is divided into a light fraction having a high $C_3$ and $C_4$ olefin content, a gasoline fraction, and several heavier fractions such as a light cycle oil, a middle cycle oil, a heavy cycle oil and a slurry oil.

In order to raise the gasoline production, one or more of the heavier product fractions may be recirculated to the cracking reactor and the $C_3$ and $C_4$ olefins present in the light fraction may be alkylated with isobutane to form alkylation gasoline. In catalytic cracking on a commercial scale an important consideration is for the amount of heat released in the regenerator to correspond substantially with the amount of heat required in the cracking reactor, thus allowing the process to be operated without the necessity to install additional heating or cooling devices.

As catalysts for catalytic cracking crystalline aluminium silicates having relatively wide pores, i.e. pore diameters larger than 0.7 nm (7 Å) have been found to be very suited. When the value of a catalytic cracking process for the production of gasoline is to be assessed, it is not only the amount of cracking gasoline obtained in the process that is to be taken into account, but also the amount of gasoline that can be prepared by alkylation of the $C_3$ and $C_4$ olefins present in the light product fraction. An attractive base on which to compare catalytic cracking processes for the production of gasoline with one another is the total amount of gasoline (cracking gasoline+alkylation gasoline) which can be obtained by the various processes.

When investigating the use of crystalline aluminium silicates having pore diameters larger than 0.7 nm (7 Å) as catalysts for the preparation of gasoline by catalytic cracking, it was found that considerably better results can be obtained by using a catalyst composition which in addition to the aforementioned crystalline aluminium silicate with wide pores contains a crystalline aluminium silicate with narrow pores and which has a special structure. Comparison of the results obtained in a cracking process carried out by using a crystalline aluminium silicate with wide pores as catalyst and those obtained in a cracking process carried out by using the afore-mentioned catalyst composition shows that the use of said catalyst composition results in a cracking gasoline of a higher quality. It is true that this gain in quality is achieved at the expense of the cracking gasoline production, which is lower when the catalyst composition is used, but this lower yield of cracking gasoline is amply compensated for by the fact that the use of the catalyst composition leads to a light product fraction which has a considerably higher $C_3$ and $C_4$ olefin content. In summary it may be stated that when the catalyst composition is used the total amount of gasoline is larger than when a catalyst is used which contains a crystalline aluminium silicate having a pore diameter larger than 0.7 nm (7 Å), but in which no narrow pore crystalline metal silicate of a special structure is present. It is assumed that the improved quality of the cracking gasoline which occurs when the catalyst composition is used may be ascribed to the fact that the narrow pore crystalline metal silicate of a special structure serves as an active cracking catalyst for further cracking n-paraffins with a low octane number boiling in the gasoline range (which have primarily been formed from the feed by cracking) to form $C_3$ and $C_4$ olefins. In the process the production of cracking gasoline will naturally fall while the octane number thereof will rise.

The crystalline metal silicates with narrow pores and of a special structure are characterized in that after one hour's calcination in air at 500°C they have the following properties:

a) an X-ray powder diffraction pattern in which the strongest lines are the four lines mentioned in Table A

TABLE A

d(Å)
11.1 ±0.2
10.0 ±0.2
3.84±0.07
3.72±0.06, and

b) in the formula which represents the composition of the silicate expressed in moles of the oxides and which, in addition to $SiO_2$, includes one or more oxides of a trivalent metal X, chosen from aluminium, iron, gallium, rhodium, chromium and scandium, the $SiO_2/X_2O_3$ molar ratio is higher than 10.

The crystalline metal silicates of a special structure may be prepared starting from an aqueous mixture

2

comprising the following compounds: one or more silicon compounds, one or more compounds containing a monovalent organic cation (R) or from which such a cation is formed during the preparation of the silicate, one or more compounds in which a trivalent metal X occurs and, if desired, one or more compounds of an alkali metal (M). The preparation is carried out by maintaining the mixture at an elevated temperature until the silicate has formed, followed by washing, drying and calcination of the silicate crystals. The various compounds from which the silicates are prepared should be present in the aqueous mixture in the following ratios, expressed in moles of the oxides:

$$M_2O:SiO_2<0.35$$

$$R_2O:SiO_2=0.01—0.5$$

$$SiO_2:X_2O_3>10 \text{ and}$$

$$H_2O:SiO_2=5—100.$$

If in the preparation of the crystalline metal silicates of a special structure the starting material is an aqueous mixture in which one or more alkali metal compounds are present, the crystalline silicates obtained will contain alkali metal. Depending on the concentration of alkali metal compounds in the aqueous mixture the crystalline silicates obtained may contain more than 1%w alkali metal. Since the presence of alkali metal in the crystalline silicates of a special structure has a very unfavourable influence on their cracking activity, only crystalline metal silicates of a special structure whose $M_2O/X_2O_3$ molar ratio is lower than 0.1 are eligible for use in the aforementioned catalyst compositions. Reduction of the alkali metal content of the crystalline silicates of a special structure prepared in the presence of an alkali metal compound may very suitably be effected by treating such silicates once or several times with a solution of an ammonium compound. Alkali metal ions are then exchanged for $NH_4^+$ ions and the silicate converted to the $NH_4^+$ form. The $NH_4^+$ form of the silicate thus obtained is converted to the $H^+$ form by calcination.

Although the use of the process described hereinbefore, wherein the cracking step is carried out using a catalyst composition containing a crystalline metal silicate of special structure which is substantially in the $H^+$ form allows a higher production of gasoline, it is still a drawback of the process that it requires an additional process step: for the higher gasoline yield is obtained only when, following the cracking process, an additional portion of gasoline is produced by alkylation of the $C_3$ and $C_4$ olefins formed. However, practical application urgently needs a cracking process which in itself leads to higher gasoline production without a second process step being required.

Continued research into this subject has now revealed that very attractive results can be achieved in the production of gasoline by the catalytic cracking of hydrocarbon mixtures boiling above the gasoline range, when in the afore-mentioned catalyst compositions the crystalline metal silicate of a special structure is substantially in the $M^+$ form instead of substantially in the $H^+$ form. In the present description a crystalline metal silicate of a special structure which is substantially in the $M^+$ form should be taken to be a silicate for which in the formula which represents the composition expressed in moles of the oxides the $M_2O/X_2O_3$ molar ratio is higher than 0.9.

It has been found that when a catalyst composition is used which, in addition to a crystalline aluminium silicate having a pore diameter larger than 0.7 nm (7 Å) (for the sake of brevity hereinafter referred to as component I), contains a crystalline metal silicate of a special structure (for the sake of brevity hereinafter referred to as component II), which component II is substantially in the $M^+$ form, a higher production of cracking gasoline and less deposition of coke on the catalyst composition is obtained than when a catalyst composition is used which contains a component I but no component II. The advantages of the use of catalyst compositions according to the invention, viz. higher yields of cracking gasoline and less coke deposit on the catalyst composition in one process step, are interchangeable. By a suitable choice of the conditions under which to carry out the catalytic cracking process, it is possible to realize considerably less coke deposit on the catalyst composition at a substantially unchanged gasoline production, or a considerably higher gasoline production at a substantially unchanged degree of coke deposit. The aspect of less coke deposit on the catalyst composition is of special interest when heavier feeds are to be processed in the catalytic cracker. It is common knowledge that, in general, the use of heavier feeds leads to more coke deposit on the catalyst. More coke on the catalyst means more heat in the regenerator, which destroys the heat balance in the cracking unit, so that additional cooling means have to be provided for. The use of a catalyst composition which shows less tendency towards the formation of coke deposit offers an excellent solution to this problem. The higher yield of cracking gasoline when using the catalyst composition according to the invention has been found to be accompanied also with higher yields of $C_3$ and $C_4$ olefins. Naturally the latter aspect is important when $C_3$ and $C_4$ olefins obtained as a by-product in the cracking process are to be converted into gasoline by a further alkylation step.

As regards the proportions between components I and II in the catalyst compositions according to the invention, in order to achieve the effects mentioned hereinbefore the quantities by weight of component II should be at least equal to that of component I. These catalyst compositions are novel.

The present invention therefore relates to catalyst compositions comprising a component I and at least an equal quantity by weight of a component II, component I being a crystalline aluminium silicate having a pore diameter larger than 0.7 nm (7 Å) and component II being a crystalline metal silicate which after one hour's calcination in air at 500°C has the following properties:

a) an X-ray powder diffraction pattern in which the strongest lines are the four lines mentioned in Table A, and

b) in the formula which represents the composition of the silicate expressed in moles of the oxides and in which, in addition to $SiO_2$, one or more oxides of an alkali metal (M) and one or more oxides of a trivalent metal X chosen from aluminium, iron, gallium, rhodium, chromium and scandium are present, the $SiO_2/X_2O_3$ molar ratio is higher than 10, characterized in that the $M_2O/X_2O_3$ molar ratio is higher than 0.9.

The present invention further relates to the use of catalyst compositions according to the invention in the production of gasoline by cracking hydrocarbon mixtures boiling above the gasoline range.

In this respect it has to be remarked that in German patent application DE—A—2149218 a catalyst has been described comprising a component I as has been described hereinbefore and a component II as has been described also hereinbefore. However, the crystalline metal silicate of special structure (component II) present in the catalyst composition described in the cited reference contained a low amount of alkali metal cations, as these cations would suppress or limit the catalytic properties (page 23, lines 8—22). Thus, in the cited application it was preferred to use no more than 0.25, preferably no more than 0.15, equivalents per gram atom of alumina of alkali metal cations, i.e. a $M_2O/Al_2O_3$ (M is an alkali metal) ratio lower than 0.25, and preferably lower than 0.15. In the catalyst of the present invention, however, the ratio $M_2O/X_2O_3$ (X is among others Al) has to be higher than 0.9.

The catalyst compositions of the invention comprise components I and II. It is preferred that these components are present in the catalyst compositions in combination with a porous matrix, such as silica, alumina, magnesia, zirconia or mixtures thereof. Especially preferred are catalyst compositions 10—50 %w of which consists of components I and II and the remainder of a porous matrix. Either of components I and II may be combined with a porous matrix individually. Components I and II may also be combined with a porous matrix together. The ratio in which components I and II are present in the catalyst compositions in accordance with the invention may vary within wide limits, provided that the quantity by weight of component II is at least equal to that of component I. Preference is given to catalyst compositions containing at most 25 and in particular at most 15 parts by weight (pbw) of component II per part by weight of component I.

As components I the usual crystalline aluminium silicates having a pore diameter larger than 7 Å known as cracking catalysts are eligible. Examples of such silicates are natural and synthetic faujasites both of the X and of the Y-type and zeolite L. Preference is given to catalyst compositions containing as component I a synthetic zeolite Y and in particular a synthetic zeolite Y in which ions of rare earth metals are present.

Catalyst component II is a crystalline metal silicate of a special structure containing one or more trivalent metals X in such quantities that the $SiO_2/X_2O_3$ molar ratio is higher than 10. Preference is given to components II in which the $SiO_2/X_2O_3$ molar ratio is higher than 50. Preference is further given to components II in which the $SiO_2/X_2O_3$ molar ratio is lower than 2000 and in particular lower than 1500. As regards the metals X present in components II, preference is given to components II in which aluminium and/or iron are present as metals X.

The crystalline metal silicates which are present in the catalyst composition as component II are defined, inter alia by the X-ray powder diffraction pattern, which they show after one hour's calcination in air at 500°C. In this pattern the strongest lines should be the four lines mentioned in Table A. The complete X-ray powder diffraction pattern of a typical example of such a silicate after one hour's calcination in air at 500°C is given in Table B.

# 0 131 986

## TABLE B

| d(Å) | Rel. int. | d(Å) | Rel. int. |
|---|---|---|---|
| 11.1 | 100 | 3.84(D) | 57 |
| 10.0 (D) | 70 | 3.72(D) | 31 |
| 8.93 | 1 | 3.63 | 16 |
| 7.99 | 1 | 3.47 | < 1 |
| 7.42 | 2 | 3.43 | 5 |
| 6.68 | 7 | 3.34 | 2 |
| 6.35 | 11 | 3.30 | 5 |
| 5.97 | 17 | 3.25 | 1 |
| 5.70 | 7 | 3.05 | 8 |
| 5.56 | 10 | 2.98 | 11 |
| 5.35 | 2 | 2.96 | 3 |
| 4.98(D) | 6 | 2.86 | 2 |
| 4.60 | 4 | 2.73 | 2 |
| 4.35 | 5 | 2.60 | 2 |
| 4.25 | 7 | 2.48 | 3 |
| 4.07 | 2 | 2.40 | 2 |
| 4.00 | 4 | | |

(D)=doublet

The crystalline metal silicates present in catalyst compositions according to the invention as components II have a $M_2O/X_2O_3$ molar ratio higher than 0.9. The introduction of alkali metal ions in order to obtain such crystalline silicates may be performed in various ways. In the synthesis of the silicate the starting material may be an aqueous mixture containing one or more compounds of an alkali metal. In that case the alkali metal ions present in the aqueous mixture will find their way at least partly into the silicate. The silicate may also be subjected, after calcination, to one or more treatments with a solution of an alkali metal compound in which the exchangeable cations present in the silicate are replaced by alkali metal ions. For use as components II in catalyst compositions according to the invention preference is given to crystalline metal silicates which have been prepared starting from an aqueous mixture containing one or more compounds of an alkali metal, and which after calcination have been treated once or several times with a solution of an alkali metal compound. For use as components II in catalyst compositions according to the invention preference is given to crystalline metal silicates which are substantially completely in the alkali metal form, i.e., that the exchangeable cations present in the silicate have been replaced substantially by alkali metal ions. For the preparation of such silicates an after-treatment of the silicate with a solution of an alkali metal compound is necessary, since during calcination the organic cations introduced when the silicate was synthesised are converted into hydrogen ions. During the after-treatment with a solution of an alkali metal compound these hydrogen ions, among the rest, are replaced by alkali metal ions. Preference is given to catalyst components II in which the alkali metal ions are sodium ions.

The present invention also relates to the use of the catalyst compositions according to the invention for the production of gasoline by cracking hydrocarbon mixtures boiling above the gasoline range. Examples of suitable feeds which can be used for the production of gasoline by catalytic cracking are atmospheric gas oils, vacuum gas oils, deasphalted distillation residues and mixtures thereof. The feed used by preference is a gas oil. Suitable conditions for the catalytic cracking are a temperature of 250—650°C and preferably of 450—600°C, a pressure of 1—10 bar and preferably of 1—7.5 bar, a space velocity of 1—250 and preferably

5

of 5—150 kg feed per kg catalyst composition per hour and a catalyst composition/feed weight ratio of 1—25 and preferably of 1.5—20.

The invention is now illustrated by the following Example.

Example

Two crystalline aluminium silicates (silicates 1 and 2) were prepared by heating mixtures of sodium hydroxide, tetrapropylammonium hydroxide, sodium aluminate and amorphous silica in water in an autoclave under autogenous pressure for 24 hours at 150°C. After cooling of the reaction mixtures the silicates formed were filtered off, washed with water until the pH of the wash water was about 8 and dried at 120°C. After one hour's calcination in air at 500°C silicates 1 and 2 had the following properties:

a) an X-ray powder diffraction pattern substantially corresponding with that mentioned in Table B,

b) a $SiO_2/Al_2O_3$ molar ratio of 130 for silicate 1 and 1000 for silicate 2.

Starting from silicates 1 and 2, silicates 1* and 2* were prepared, by calcining silicates 1 and 2 respectively, at 500°C, boiling with a 1.0 molar sodium nitrate solution, washing with water, boiling again with a 1.0 molar sodium nitrate solution and washing, drying at 120°C and calcination at 500°C. The $Na_2O/Al_2O_3$ molar ratio of silicates 1* and 2* was 1.

Starting from a catalyst composition A two catalyst compositions (B and C) were prepared by mixing catalyst composition A with silicate 1* and silicate 2*, respectively.

Catalyst compositions A—C had the following compositions:

Catalyst composition A:

a mixture of a faujasite and a silica-alumina matrix in a 1:13 weight ratio.

Catalyst composition B:

a mixture of catalyst composition A and silicate 1* in a 1:1 weight ratio.

Catalyst composition C:

a mixture of catalyst composition A and silicate 2* in a 1:1 weight ratio.

Catalyst compositions A—C were used in five experiments (Experiments 1—5) for the production of gasoline by cracking a vacuum distillate obtained in the vacuum distillation of an atmospheric distillation residue from a crude mineral oil. In the experiments the feed was contacted at a temperature of 524°C and at atmospheric pressure separately with each one of the catalyst compositions A—C. The other conditions under which the experiments were carried out and the results of the experiments are given in Tables C—E. The yields given are yields calculated on feed.

## TABLE C

| Experiment No. | 1 | 2 |
|---|---|---|
| Catalyst composition | A | B |
| Space velocity, $kg \cdot kg^{-1} \cdot h^{-1}$ | 15.9 | 7.9 |
| Catalyst composition/feed weight ratio | 3.8 | 7.6 |
| Yield of $C_5$—221°C gasoline, %w | 43.5 | 50.2 |
| Quantity of coke formed, %w | 3.8 | 3.8 |
| Yield of $C_3$ and $C_4$ olefins, %w | 8.1 | 9.8 |

## TABLE D

| Experiment No. | 3 | 4 |
|---|---|---|
| Catalyst composition | A | C |
| Space velocity, $kg \cdot kg^{-1} \cdot h^{-1}$ | 33.3 | 13.1 |
| Catalyst composition/feed weight ratio | 1.8 | 4.6 |
| Yield of $C_5$—221°C gasoline, %w | 34.4 | 40.7 |
| Quantity of coke formed, %w | 2.1 | 2.1 |
| Yield of $C_3$ and $C_4$ olefins, %w | 4.2 | 5.5 |

6

# 0 131 986

TABLE E

| Experiment No. | 5 | 4 |
|---|---|---|
| Catalyst composition | A | C |
| Space velocity, $kg \cdot kg^{-1} \cdot h^{-1}$ | 18.0 | 13.1 |
| Catalyst composition/feed weight ratio | 3.3 | 4.6 |
| Yield of $C_5$—221°C gasoline, %w | 40.7 | 40.7 |
| Quantity of coke formed, %w | 3.5 | 2.1 |

Of the experiments listed in Tables C—E only Experiments 2 and 4 are experiments according to the invention. The other experiments are comparative and fall outside the scope of the invention. Comparison of the results of Experiments 1 and 2 given in Table C as well as of the results of Experiments 3 and 4 given in Table D shows that at equal quantities of coke formed on the catalyst the use of a catalyst composition according to the invention leads to a considerably higher yield both of cracking gasoline and of $C_3$ and $C_4$ olefins. Comparison of the results of Experiments 4 and 5 given in Table E shows that at equal yields of cracking gasoline the use of a catalyst composition according to the invention results in a considerably lower quantity of coke formed on the catalyst.

## Claims

1. Catalyst compositions comprising a component I and at least an equal quantity by weight of a component II, component I being a crystalline aluminium silicate having a pore diameter larger than 0.7 nm (7 Å) and component II being a crystalline metal silicate which after one hour's calcination in air at 500°C has the following properties:

a) an X-ray powder diffraction pattern in which the strongest lines are the four lines mentioned in Table A

TABLE A

$d(Å)$
11.1 ±0.2
10.0 ±0.2
3.84±0.07
3.72±0.06, and

b) in the formula which represents the composition of the silicate expressed in moles of the oxides and in which, in addition to $SiO_2$, one or more oxides of an alkali metal (M) and one or more oxides of a trivalent metal X chosen from aluminium, iron, gallium, rhodium, chromium and scandium are present, the $SiO_2/X_2O_3$ molar ratio is higher than 10, characterized in that the $M_2O/X_2O_3$ molar ratio is higher than 0.9.

2. Catalyst composition as claimed in claim 1, characterized in that 10—50 %w thereof consists of components I and II and the remainder of a porous matrix.

3. Catalyst compositions as claimed in claim 1 or 2, characterized in that per part by weight of component I they contain at most 25 pbw of component II.

4. Catalyst compositions as claimed in claim 3, characterized in that per part by weight of component I they contain at most 15 pbw of component II.

5. Catalyst compositions as claimed in any one of claims 1—4, characterized in that as component I they comprise a synthetic zeolite Y.

6. Catalyst compositions as claimed in claim 5, characterized in that as component I they comprise a synthetic zeolite Y in which ions of rare earth metals are present.

7. Catalyst compositions as claimed in any one of claims 1—6, characterized in that as component II they comprise a silicate in which the $SiO_2/X_2O_3$ molar ratio is lower than 2000.

8. Catalyst compositions as claimed in claim 7, characterized in that as component II they comprise silicates in which the $SiO_2/X_2O_3$ molar ratio lies between 50 and 1500.

9. Catalyst compositions as claimed in any one of claims 1—8, characterized in that as component II they comprise silicates in which aluminium and/or iron are present as metals X.

10. Catalyst compositions as claimed in any one of claims 1—9, characterized in that as component II they comprise a silicate which has been prepared starting from an aqueous mixture containing one or more compounds of an alkali metal and which after calcination has been treated once or several times with a solution of an alkali metal compound.

11. Catalyst compositions as claimed in any one of claims 1—10, characterized in that as component II they comprise a silicate which is substantially completely in the alkali metal form.

7

**0 131 986**

12. Catalyst compositions as claimed in any one of claims 1—11, characterized in that as component II they comprise a silicate in which the alkali metal ions are sodium ions.

13. A process for the production of gasoline characterized in that a hydrocarbon mixture boiling above the gasoline range is cracked by using a catalyst composition as claimed in any one of claims 1—12, and that a fraction boiling in the gasoline range is separated from the cracked product.

14. A process as claimed in claim 13, characterized in that a gas oil is used as hydrocarbon mixture boiling above the gasoline range.

15. A process as claimed in claim 13 or 14, characterized in that it is carried out at a temperature of 250—650°C, a pressure of 1—10 bar, a space velocity of 1—250 kg feed per kg catalyst composition per hour and a catalyst composition/feed weight ratio of 1—25.

16. A process as claimed in claim 15, characterized in that it is carried out at a temperature of 450—600°C, a pressure of 1—7.5 bar, a space velocity of 5—150 $kg \cdot kg^{-1} \cdot h^{-1}$ and a catalyst composition/feed weight ratio of 1.5—20.

**Patentansprüche**

1. Katalysatorzusammensetzungen, umfassend eine Komponente I und mindestens eine gleiche Gewichtsmenge an einer Komponente II, wobei die Komponente I ein kristallines Aluminiumsilikat mit einem Porendurchmesser von mehr als 0,7 nm (7Å) ist, und die Komponente II ein kristallines Metallsilikat darstellt, welches nach einstündiger Kalzinierung in Luft bei 500°C die folgenden Eigenschaften aufweist:

a) ein Röntgenbeugungspulverdiagramm, in welchem als stärkste Linien die nachstehend in Tabelle A aufgeführte vier Linien vorkommen

TABELLE A

d(Å)

11,1 ±0,2

10,0 ±0,2

3,84±0,07

3,72±0,06, und

b) in der Formel, welche die Zusammensetzung des Silikats wiedergibt, ausgedrückt in Molen der Oxide, und in welcher zusätzlich zu $SiO_2$ ein oder mehrere Oxide eines Alkalimetalls (M) und ein oder mehrere Oxide eines dreiwertigen Metalls X vorkommen, ausgewählt aus Aluminium, Eisen, Gallium, Rhodium, Chrom und Scandium, das Molverhältnis $SiO_2/X_2O_3$ einen Wert von mehr als 10 hat, dadurch gekennzeichnet, daß das Molverhältnis $M_2O/X_2O_3$ einen Wert von mehr als 0,9 aufweist.

2. Katalysatorzusammensetzungen, wie in Anspruch 1 beansprucht, dadurch gekennzeichnet, daß sie zu 10 bis 50 Gewichtsprozent aus den Komponenten I und II bestehen und daß der Rest aus einer porösen Matrix besteht.

3. Katalysatorzusammensetzungen, wie in Anspruch 1 oder 2 beansprucht, dadurch gekennzeichnet, daß sie je Gewichtsteil der Komponente I höchstens 25 Gewichtsteile der Komponente II enthalten.

4. Katalysatorzusammensetzungen, wie in Anspruch 3 beansprucht, dadurch gekennzeichnet, daß sie je Gewichtsteil der Komponente I höchstens 15 Gewichtsteile der Komponente II enthalten.

5. Katalysatorzusammensetzungen, wie in irgendeinem der Ansprüche 1 bis 4 beansprucht, dadurch gekennzeichnet, daß sie als Komponente I einen synthetischen Zeolith Y enthalten.

6. Katalysatorzusammensetzungen, wie in Anspruch 5 beansprucht, dadurch gekennzeichnet, daß sie als Komponente I einen synthetischen Zeolith Y enthalten, in welchem Ionen seltener Erdmetalle enthalten sind.

7. Katalysatorzusammensetzungen, wie in irgendeinem der Ansprüche 1 bis 6 beansprucht, dadurch gekennzeichnet, daß sie als Komponente II ein Silkat enthalten, in welchem das Molverhältnis $SiO_2/X_2O_3$ einen Wert unter 2000 aufweist.

8. Katalysatorzusammensetzungen, wie in Anspruch 7 beansprucht, dadurch gekennzeichnet, daß sie als Komponente II Silikate enthalten, in welchen das Molverhältnis $SiO_2/X_2O_3$ einen Wert im Bereich von 50 bis 1500 aufweist.

9. Katalysatorzusammensetzungen, wie in irgendeinem der Ansprüche 1 bis 8 beansprucht, dadurch gekennzeichnet, daß sie als Komponente II Silikate enthalten, in welchen Aluminum und/oder Eisen als Metalle X enthalten sind.

10. Katalysatorzusammensetzungen, wie in irgendeinem der Ansprüche 1 bis 9 beansprucht, dadurch gekennzeichnet, daß sie als Komponente II ein Silikat enthalten, welches hergestellt worden ist unter Verwendung einer wäßrigen Mischung als Ausgangsmaterial, welche ein oder mehrere Komponenten eines Alkalimetalls enthält, und welche nach der Kalzinierung ein oder mehrere Male mit einer Lösung einer Alkalimetallverbindung behandelt worden sind.

11. Katalysatorzusammensetzungen, wie in irgendeinem der Ansprüche 1 bis 10 beansprucht, dadurch gekennzeichnet, daß sie als Komponente II ein Silikat enthalten, welches praktisch vollständig in der Alkalimetallform vorliegt.

12. Katalysatorzusammensetzungen, wie in irgendeinem der Ansprüche 1 bis 11 beansprucht, dadurch

8

gekennzeichnet, daß sie als Komponente II ein Silikat enthalten, in welchem die Alkalimetallionen Natriumionen sind.

13. Ein Verfahren zur Herstellung von Benzin, dadurch gekennzeichnet, daß eine oberhalb des Benzinsiedebereichs siedende Kohlenwasserstoffmischung unter Verwendung einer Katalysatorzusammensetzung, wie sie in iregendeinem der Ansprüche 1 bis 12 beansprucht wird, gekrackt wird und daß eine im Benzinsiedebereich siedende Fraktion von dem Krackprodukt abgetrennt wird.

14. Ein Verfahren, wie in Anspruch 13 beansprucht, dadurch gekennzeichnet, daß als oberhalb des Benzinsiedebereiches siedende Kohlenwasserstoffmischung ein Gasöl verwendet wird.

15. Ein Verfahren, wie in Anspruch 13 oder 14, beansprucht, dadurch gekennzeichnet, daß es bei einer Temperatur von 250 bis 650°C, einem Druck von 1 bis 10 bar, einer Raumgeschwindigkeit von 1 bis 250 kg Zuspeisung je kg Katalysatorzusammensetzung je Stunde und bei einem Gewichtsverhältnis von Katalysatorzusammensetzung zu Zuspeisung von 1 bis 25 durchgeführt wird.

16. Ein Verfahren, wie in Anspruch 15 beansprucht, dadurch gekennzeichnet, daß es bei einer Temperatur von 450 bis 600°C, einem Druck von 1 bis 7,5 bar, einer Raumgeschwindigkeit von 5 bis 150 $kg \cdot kg^{-1} \cdot h^{-1}$ und einem Gewichtsverhältnis von Katalysatorzusammensetzung zu Zuspeisung von 1,5 bis 20 durchgeführt wird.

## Revendications

1. Compositions catalytiques comprenant un constituant I et au moins une quantité égale en poids d'un constituant II, le constituant I étant un silicate d'aluminium, cristallin, ayant um diamètre de pores plus large que 0,7 nm (7 Å) et le constituant II étant un silicate de métal, cristallin, qui après une heure de calcination à l'air, à 500°C a les propriétés suivantes:

a) un diagramme de poudre par diffraction des rayons X dans lequel les raies les plus intenses sont les quatre raies mentionnées dans le Tableau A.

TABLEAU A

d(Å)
11,1 ±0,2
10,0 ±0,2
3,84±0,07
3,72±0,06, et

b) dans la formule qui représente la composition du silicate exprimée en moles des oxydes et dans laquelle, en plus de $SiO_2$, il y a un ou plusieurs oxydes d'un métal alcalin (M) et un ou plusieurs oxydes d'un métal trivalent X choisi parmi l'aluminium, le fer, le gallium, le rhodium, le chrome, et le scandium, le rapport molaire $SiO_2/X_2O_3$ est supérieur à 10, caractérisées en ce que le rapport molaire $M_2O/X_2O_3$ est supérieur à 0,9.

2. Compositions catalytiques selon la revendication 1, caractérisées en ce que les constituants I et II constituent 10—50% en poids de celles-ci, le reste étant une matrice poreuse.

3. Compositions catalytiques selon la revendication 1 ou 2, caractérisées en ce qu'elles contiennent au plus 25 parties en poids du constituant II par partie en poids du constituant I.

4. Compositions catalytiques selon la revendication 3, caractérisées en ce qu'elles contiennent au plus 15 parties en poids du constituant II par partie en poids du constituant I.

5. Compositions catalytiques selon l'une quelconque des revendications 1—4, caractérisées en ce qu'elles comprennent une zéolite synthétique Y à titre de constituant I.

6. Compositions catalytiques selon la revendication 5, caractérisées en ce que, à titre de constituant I, elles comprennent une zéolite synthétique Y dans laquelle sont présents des ions des métaux des terres rares.

7. Compositions catalytiques selon l'une quelconque des revendications 1—6, caractérisées en ce que, à titre de constituant II, elles comprennent un silicate dans lequel le rapport molaire $SiO_2/X_2O_3$ est inférieur à 2000.

8. Compositions catalytiques selon la revendication 7, caractérisées en ce que, à titre de constituant II, elles comprennent des silicates dans lesquels le rapport molaire $SiO_2/X_2O_3$ est compris entre 50 et 1500.

9. Compositions catalytiques selon l'une quelconque des revendications 1—8, caractérisées en ce que, à titre de constituant II, elles comprennent des silicates dans lesquels l'aluminium et/ou le fer sont présents pour les métaux X.

10. Compositions catalytiques selon l'une quelconque des revendications 1—9, caractérisées en ce que, à titre de constituant II, elles comprennent un silicate qui a été préparé à partir d'un mélange aqueux contenant un ou plusieurs composés d'un métal alcalin et qui après calcination a été traité une ou plusieurs fois avec une solution d'un composé d'un métal alcalin.

11. Compositions catalytiques selon l'une quelconque des revendications 1—10, caractérisées en ce que, à titre de constituant II, elles comprennent un silicate qui est pratiquement complètement sous la forme de métal alcalin.

12. Compositions catalytiques selon l'une quelconque des revendications 1—11, caractérisées en ce que, à titre constituant II, elles comprennent un silicate dans lequel les ions de métal alcalin sont des ions sodium.

13. Procédé pour la production d'essence, caractérisé en ce qu'on craque un mélange d'hydrocarbures sont l'ébullition est au-dessus de la plage de l'essence, à l'aide d'une composition catalytique selon l'une quelconque des revendications 1—12, et en ce qu'on sépare une fraction dont l'ébullition est dans la plage de l'essence, du produit de craquage.

14. Procédé selon la revendication 13, caractérisé en ce qu'on utilise un gas-oil à titre de mélange d'hydrocarbures bouillant au-dessus de la plage de l'essence.

15. Procédé selon la revendication 13 ou 14, caractérisé en ce qu'on l'effectue à une température de 250—650°C, une pression de 1—10 bar, une vitesse spatiale de 1—250 kg d'alimentation par kg de composition catalytique par heure et dans un rapport pondéral de la composition catalytique/alimentation de 1—25.

16. Procédé selon la revendication 15, caractérisé en ce qu'on l'effectue à une température de 450—600°C, une pression de 1—7,5 bar, une vitesse spatiale de 5—150 $kg \cdot kg^{-1} \cdot h^{-1}$ et dans un rapport pondéral de la composition catalytique/alimentation de 1,5—20.